# EUROPEAN PATENT APPLICATION

(11) **EP 1 035 497 A1**
(43) Date of publication of application: **13.09.2000**
(21) Application number: 00301684.7
(22) Date of filing: 02.03.2000
(51) Int. Cl.: G06K 13/08, G06K 7/00

(54) **Card ejector mechanism**

(30) Priority: 08.03.1999 JP 5968499; 11.08.1999 JP 22763199
(71) Applicant: KEL CORPORATION, Tama-shi, Tokyo (JP)
(72) Inventor: Narui, Fumio, Tama-shi, Tokyo (JP); Ikemoto, Shinichi, Tama-shi, Tokyo (JP); Koike, Shigenori, Tama-shi, Tokyo (JP)
(74) Representative: Wolff, Francis Paul

(57) **Abstract**

A sliding member 130 is slidably provided to a housing base 110, and this sliding member 130 is biased forward by a tension spring 170. When the insertion of an IC card 2 is complete, a toggle device 160 keeps the sliding member 130 locked against the biasing force of the tension spring 170. An electromagnetic solenoid 190 attracts a movable magnet core 155 forward when current is supplied, and causes a second arm 150 to swing so that a protrusion 163 on the toggle device 160 is pressed to the left by a protrusion 153. As a result, the above-mentioned lock hold provided by the toggle device 160 is released, and the sliding member 130 is slid forward by the biasing force from the tension spring 170, ejecting the IC card 2.

## Description

### FIELD OF THE INVENTION

The present invention relates to a card ejector mechanism that ejects a card which has been inserted in a card receptacle space formed in a housing.

### BACKGROUND OF THE INVENTION

The use of PC cards, memory cards, IC cards, and other such card-form information storage media (hereinafter collectively referred to as cards) has been on the rise in recent years, and a variety of card connectors that allow cards to be inserted and removed have been put to practical use. With these connectors, a card that has been inserted through an opening formed in the front of a housing is received in a card receptacle space formed inside the housing, and with the card in this inserted state, contacts provided inside the housing are made to touch flat contacts provided on the bottom of the card, allowing data transfer to be performed.

Some of these connectors have a card ejector mechanism for ejecting an inserted card. These card ejector mechanisms are generally designed such that an eject button or the like provided to the housing is manually operated, which mechanically actuates a link mechanism provided inside the housing, and this pushes the card out of its receptacle space. In other cases, the housing is furnished with an electric motor, a rack that is driven by this motor, and other such mechanisms, and the card is ejected electrically. With these designs that make use of electrical power, unlike those which are mechanically operated, the card can be ejected by remote operation, which makes the connector much easier to operate.

Unfortunately, although they allow remote operation, problems with connectors designed so that the card is ejected using an electric motor as above are that the apparatus is bulkier, the electric motor has to be driven during the ejection of the card, so electrical power consumption is higher, and it may be impossible to eject the card if there is a malfunction with any of the constituent electrical parts, among other problems.

### SUMMARY OF THE INVENTION

It is an object of the present invention to obtain a card ejector mechanism with which a card can be ejected by remote operation and which is both compact and low in cost.

Another object of the present invention is to provide a card ejector mechanism with which a card can be ejected with less electrical power and with which a card can be reliably ejected even in the event of an electrical malfunction.

The card ejector mechanism pertaining to the present invention has a housing having a card receptacle space for receiving a card (such as an IC card 2) inserted through an opening formed at the front end, a sliding member that is provided slidably in the longitudinal direction within the housing and that is pushed and slid to the rear by the end of the card when the card is inserted into the card receptacle space, an elastic member (such as a tension spring 170) that biases the sliding member forward, locking means (such as a first arm member 140, a toggle device 160, and a torsion spring 180) for keeping the sliding member locked against the biasing force of the elastic member when the insertion of the card into the card receptacle space has been completed, and unlocking means (such as an electromagnetic solenoid 190, a second arm member 150, and a movable magnetic core 155) for releasing the lock hold of the card by the locking means when a supply of electrical power has been received.

With this card ejector mechanism, when a card is inserted into the card receptacle space, the sliding member is pushed by the end of the card and slid to the rear. The sliding member at this point is biased forward by the elastic member, but when the insertion of the card is complete, the locking means keeps the sliding member locked against this biasing force. Also, if electrical power is supplied to the unlocking means when the card is in this fully inserted state, the unlocking means will be actuated so as to release the above-mentioned lock hold provided by the locking means, so the sliding member is subjected to the biasing force of the elastic member and slid forward, and the card is pushed out of the card receptacle space. This completes the ejection of the card.

With a structure such as this, it is possible to eject a card by remote operation using electrical power, and only enough power to release the lock hold of the locking means needs to be generated (generally only a tiny amount of current lasting only an instant), with the card ejection itself being performed by the biasing force of an elastic member which requires no electrical power (such as a spring, rubber, or an elastomer), so less electricity is consumed and the structure is simpler than with a mechanism in which an electric motor is used to eject the card, and this affords a cost reduction. Also, since an electric motor is not necessarily required, the connector can be made more compact. Furthermore, a card connector equipped with the above-mentioned card ejector mechanism can be produced by providing inside the above-mentioned housing a plurality of contacts that perform data transfer by touching flat contacts attached to the card.

Another card ejector mechanism pertaining to the present invention has a housing having a card receptacle space for receiving a card inserted through an opening formed at the front end, a sliding member that is provided slidably in the longitudinal direction within the housing and that is pushed and slid to the rear by the end of the card when the card is inserted into the card receptacle space, an elastic member (such as a spring 530) that biases the sliding member forward, locking means (such as a toggle device 540 and a first coil spring 545) for keeping the sliding member locked against the biasing force of the elastic member when the insertion of the card into the card receptacle space has been completed, electric unlocking means (such as an unlocking shaft 550 and an electromagnetic solenoid 560) for releasing the lock hold of the card by the locking means when a supply of electrical power has been received, and manual unlocking means (such as an unlocking lever 570) for releasing the lock hold of the sliding member by the locking means through manual operation.

With this card ejector mechanism, when a card is inserted into the card receptacle space, the sliding member is pushed by the end of the card and slid to the rear. The sliding member at this point is biased forward by the elastic member, but when the insertion of the card is complete, the locking means keeps the sliding member locked against this biasing force. At this point, while the card is in its fully inserted state, the above-mentioned lock hold will be released if either electrical power is supplied to the electric unlocking means or the manual unlocking means is operated by hand, so the sliding member is subjected to the biasing force of the elastic member and slid forward, and the card is pushed out of the card receptacle space and ejected outside of the housing.

With a structure such as this, it is possible to eject a card by remote operation using electrical power, and only enough power to release the lock hold of the locking means needs to be generated (generally only a tiny amount of current lasting only an instant), with the card ejection itself being performed by the biasing force of an elastic member which requires no electrical power (such as a spring, rubber, or an elastomer), so less electricity is consumed and the structure is simpler than with a mechanism in which an electric motor is used to eject the card, and this affords a cost reduction. Also, since an electric motor is not necessarily required, the connector can be made more compact. Since the above-mentioned lock hold can be released by the manual unlocking means as well, the card can still be reliably ejected even if the electric unlocking means should suffer an electrical malfunction (such as insufficient current) that would prevent electrical unlocking.

A preferred constitution here is one in which the locking means has a toggle device, the electric unlocking means has a shaft member coupled to the toggle device and an electromagnetic solenoid that attracts the sliding member and operates the toggle device to the unlocking side when electrical power has been supplied, and the manual unlocking means presses on the shaft member when manually operated so that the toggle device is moved to the unlocking side. In this case, the manual unlocking means only strikes and pushes the shaft member when manually operated, and the shaft member and the manual unlocking means can be provided in a non-engaged state. Accordingly, when the electric unlocking means is actuated, that is, when the shaft member is attracted by the electromagnetic solenoid, the manual unlocking means will not move along with [the electric unlocking means], which prevents noise from being generated by the operation of the manual unlocking means every time a card is ejected by the electric unlocking means.

Further scope of applicability of the present invention will become apparent from the detailed description given hereinafter. However, it should be understood that the detailed description and specific examples, while indicating preferred embodiments of the invention, are given by way of illustration only, since various changes and modifications within the sprit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:
FIG. 1 is an oblique view of an IC card and a card connector equipped with the card ejector mechanism pertaining to the present invention;
FIG. 2 is a plan view of the structure of the connector main body when the housing cover has been removed;
FIG. 3 is a front view of the connector main body viewed along the III-III line in FIG. 1;
FIG. 4 is a cross section of the connector main body along the IV-IV line in FIG. 2;
FIG. 5 is a cross section of the connector main body along the V-V line in FIG. 2;
FIG. 6 is a cross section of the connector main body along the VI-VI line in FIG. 2;
FIG. 7 is a cross section of the connector main body along the VII-VII line in FIG. 4;
FIG. 8 is an oblique view of first and second switch members;
FIGS. 9A and 9B are plan views of the structure of the ejector when the housing cover has been removed and with the connector main body not shown, with FIG. 9A showing the state prior to the insertion of an IC card, and FIG. 9B showing the state in which the IC card is fully inserted;
FIGS. 10A and 10B are approximate side views of the elastic deformation of a first contact that accompanies the insertion of the IC card, with FIG. 10A showing the state in which the distal end of the IC card has struck the pressing component of the first contact, and FIG. 10B showing the state in which the first contact has undergone elastic deformation and its contact component is touching the flat contact of the IC card;
FIGS. 11A and 11B are approximate side views of the elastic deformation of a second contact that accompanies the insertion of the IC card, with FIG. 11A showing the state in which the distal end of the IC card has struck the pressing component of the second contact, and FIG. 11B showing the state in which the second contact has undergone elastic deformation and its contact component is touching the flat contact of the IC card;
FIGS. 12A and 12B are approximate side views of the elastic deformation of first and second switch members that accompanies the insertion of the IC card, with FIG. 12A showing the state in which the distal end of the IC card has struck the first switch member, and FIG. 12B showing the state in which the first switch member has undergone elastic deformation and its contact component is touching the contact component of the second switch member;
FIGS. 13A and 13B are plan view of the structure of the ejector pertaining to a second embodiment, with FIG. 13A showing the state prior to card insertion, and FIG. 13B showing the state in which the card is fully inserted;
FIGS. 14A, 14B, and 14C are diagrams illustrating the movement of the toggle device during card insertion.

### DESCRIPTION OF THE PREFERRED EMBODIMENTS

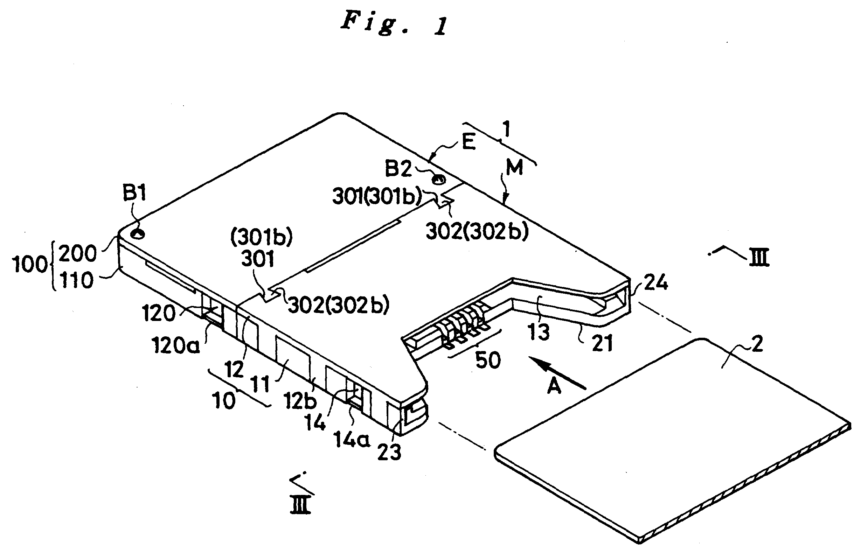

FIG. 1 shows an IC card 2 and a card connector (hereinafter referred to merely as "connector") 1 that receives this IC card 2 such that the card can be removed. The connector 1 comprises a connector main body M and an ejector E.

An IC chip is disposed inside the IC card 2, and various types of information and the like can be recorded therein. A plurality of flat contacts (not shown) are formed on the back of the IC card 2, and when the IC card 2 is inserted into a card receptacle space 13 through a card receptacle slot 13a in the connector 1 as indicated by the arrow A, the contacts provided within the connector main body M (hereinafter referred to as first and second contacts 40 and 50) strike and are connected with the above-mentioned flat contacts of the IC card 2, allowing information to be exchanged. To facilitate description, the direction of arrow A will hereinafter be defined as the longitudinal direction (with the end of the arrow opposite the point being the front), the width direction of the IC card 2 as the lateral direction (with the left being the left side of the connector 1 as viewed from the IC card 2), and the thickness direction of the connector 1 as the vertical direction.

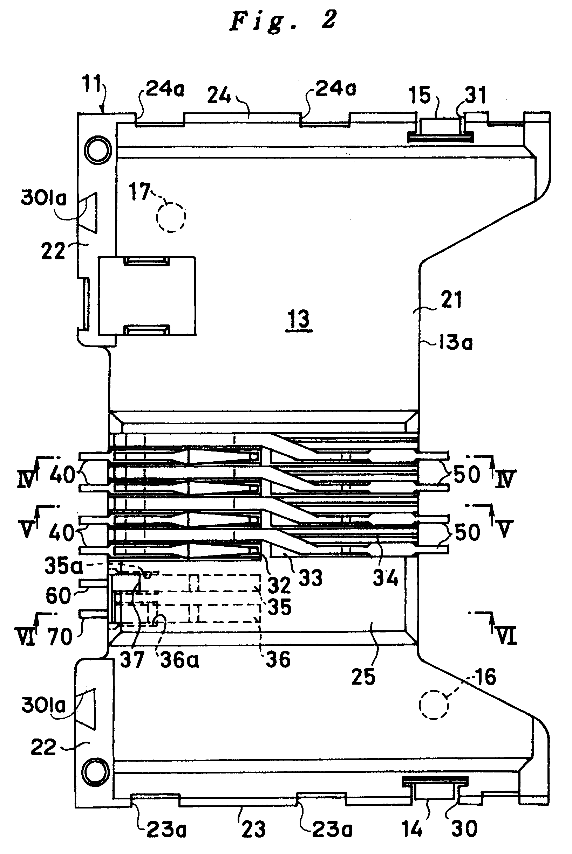

The connector main body M has a connector main body housing 10, a plurality of first and second contacts 40 and 50 made of a conductive metal material and provided inside this connector main body housing 10, and first and second switch members 60 and 70 also made of a conductive metal material (see FIGS. 1 and 2).

The connector main body housing 10 has a housing base 11 and a main body housing cover 12 attached over this housing base 11. As shown in FIG. 2, the housing base 11 has a bottom wall 21, a rear wall 22 formed extending upward at the rear end of this bottom wall 21, and left and fight side walls 23 and 24 formed extending upward at the left and right ends of the bottom wall 21. These bottom wall 21, rear wall 22, and side walls 23 and 24 of the housing base 11 and the main body housing cover 12 form the card receptacle space 13 (the center of the rear wall 22 is open), and the card receptacle slot 13a is formed at the front of this card receptacle space 13. The rear wall 22 is provided with left and right protrusion attachment grooves 301a that are cut out in a triangular shape.

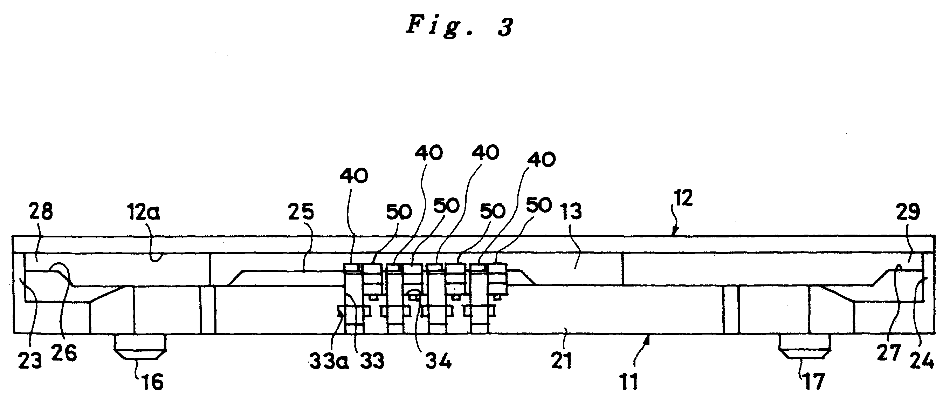

As shown also in FIG. 3, a center trapezoidal component 25 and left and fight side trapezoidal components 26 and 27, which protrude upward so that their upper surfaces are a specific distance away from the lower surface 12a of the main body housing cover 12, are formed in the approximate center and on the left and right sides of (to the inside of the side walls 23 and 24) the bottom wall 21. The IC card 2 is inserted between the lower surface of the main body housing cover 12 and the center trapezoidal component 25 and side trapezoidal components 26 and 27 within the card receptacle space 13, and the upper surfaces of the side trapezoidal components 26 and 27 and the lower surface 12a of the main body housing cover 12 form guide grooves 28 and 29 that allow the IC card 2 to be inserted more smoothly. As shown in FIG. 2, fixing piece attachment grooves 30 and 31 that extend vertically are provided to the left and right side walls 23 and 24, and fixing pieces 14 and 15 are attached to these fixing piece attachment grooves 30 and 31. Positioning protrusions 16 and 17 that protrude downward are provided at the left front and right rear of the lower surface of the bottom wall 21, and these fixing pieces 14 and 15 and positioning protrusions 16 and 17 are used in the attachment of the connector 1 to a board (discussed below).

As shown in FIG. 2, first grooves 32 (four places) for attaching four first contacts 40, and second grooves 33 (four places) and third grooves 34 (four places) for attaching four second contacts 50 are provided to the center trapezoidal component 25, each groove extending in the longitudinal direction and parallel to the other grooves. The first grooves 32 are located at the rear half of the center trapezoidal component 25, and the second grooves 33 at the front half of the center trapezoidal component 25. The two sets of grooves 32 and 33 are provided such that they are aligned in the longitudinal direction and their center axes coincide. The third grooves 34 are located to the right side (at the top of the page in FIG. 2) of the longitudinally aligned grooves 32 and 33. A first space 35 and second space 36 for attaching a first switch member 60 and a second switch member 70 within the center trapezoidal component 25 are provided extending in the longitudinal direction.

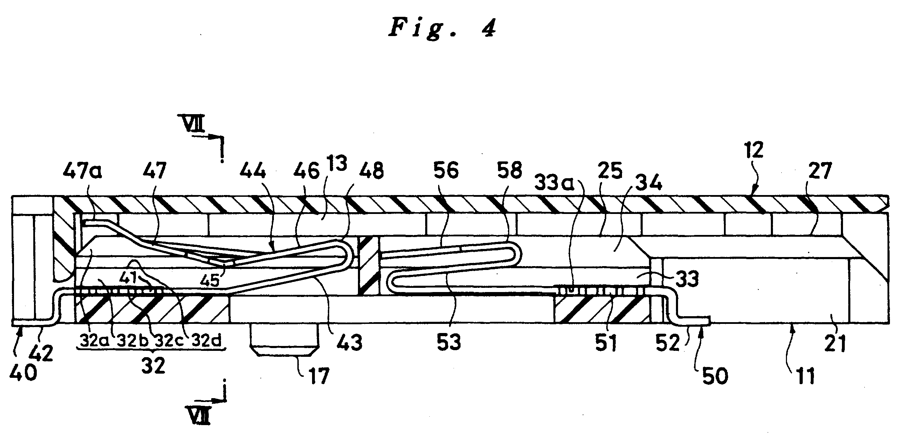

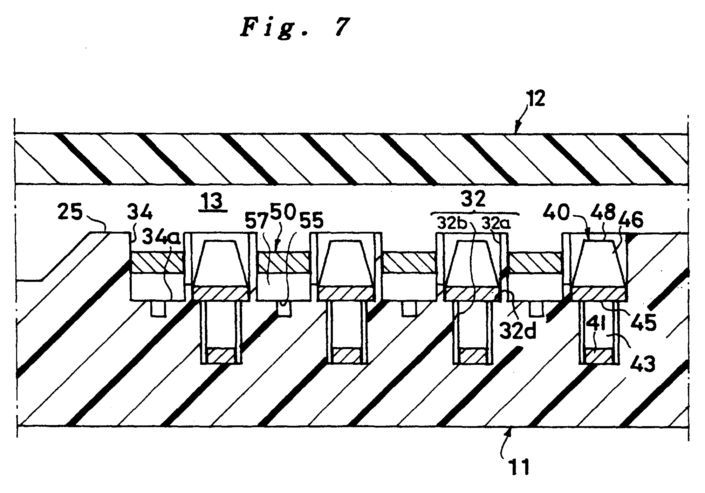

As shown in FIGS. 4 and 7, the first grooves 32 are formed such that they have upper grooves 32a and lower grooves 32b that are located below these upper grooves 32a and are narrower than the upper grooves 32a. First contact attachment grooves 32c, which are formed wider than the lower grooves 32b, are provided to the lower portions of these lower grooves 32b (just the part on the rear end side). The second grooves 33 are formed such that they have the same depth as the lower grooves 32b of the first grooves 32, as shown in FIG. 4, and the lower portions thereof (just the part on the front end side) are provided with second contact attachment grooves 33a formed wider than the second grooves 33 (see FIG. 3). The third grooves 34 are formed such that they have the same depth as the upper grooves 32a of the first grooves 32.

As shown in FIG. 4, the first contacts 40 have fixed components 41 fixed by press-fitting into the first contact attachment grooves 32c, lead components 42 extending to the rear of the bottom wall 21 and curving downward and to the rear from the fixed components 41, linking components 43 formed extending diagonally forward and upward from the fixed components 41, and V-shaped arm components 44 that connect with these linking components 43. These V-shaped arm components 44 are furnished with first arm components 46 extending diagonally forward and upward from a base 45, and second arm components 47 extending diagonally rearward and upward from the above-mentioned base 45, and contact components 48 formed at the distal ends of the first arm components 46 are connected with the above-mentioned linking components 43 (the second arm components 47 are located above the fixed components 41). As shown in FIG. 7, the lower portions of the linking components 43 and the fixed components 41 are held in the lower grooves 32b, and the V-shaped arm components and the upper portions of the linking components 43 are held in the upper grooves 32a. Here, the portions of the first contacts 40 above the fixed components 41 are elastically deformable, but the base 45 is formed narrower than the upper grooves 32a and wider than the lower grooves 32b, and strikes the bottom surfaces 32d of the upper grooves 32a, which restricts downward displacement. Also, the contact components 48 are located lower than the card receptacle space 13, and pressing components 47a formed by bending the distal ends of the second arm components 47 more or less horizontally are located within the card receptacle space 13.

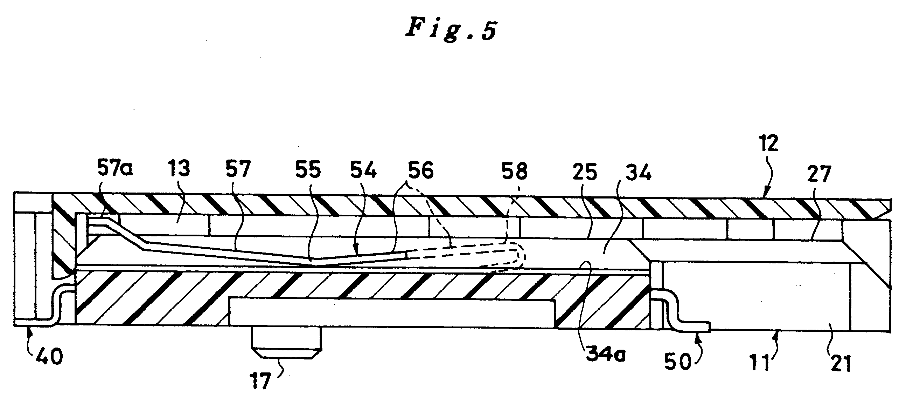

As shown in FIGS. 4 and 5, the second contacts 50 have fixed components 51 fixed by press-fitting into the second contact attachment grooves 33a, lead components 52 curving forward and to the rear from the fixed components 51 and extending ahead of the bottom wall 21, linking components 53 formed extending rearward from the fixed components 51 and then turning back and extending diagonally forward and upward, and V-shaped arm components 54 that connect with these linking components 53. These V-shaped arm components 54 are furnished with first arm components 56 extending diagonally forward and upward from a base 55, and second arm components 57 extending diagonally rearward and upward from the above-mentioned base 55, and contact components 58 formed at the distal ends of the first arm components 56 are connected with the above-mentioned linking components 53 (the first arm components 56 are located behind and above the fixed components 51). As shown in FIGS. 2 and 3, the first arm components 56 of the V-shaped arm components 54 extend curving laterally from the contact components 58 toward the base 55 (In FIG. 2, curving upward on the page). Accordingly, the fixed components 51 and linking components 53 of the second contacts 50 are housed in the second grooves 33, the first arm components 56 straddle the second grooves 33 and third grooves 34, and the base 55 and the second arm components 57 are housed in the third grooves 34. Here, the portions of the second contacts 50 above the fixed components 51 are elastically deformable, but the base 55 strikes the bottoms 34a of the third grooves 34, which restricts downward displacement. Also, the contact components 58 are located lower than the card receptacle space 13, and pressing components 57a formed by bending the distal ends of the second arm components 57 more or less horizontally are located within the card receptacle space 13.

Thus, the contact components 58 and fixed components 51 of the second contacts 50 are disposed such that they are located in front of the contact components 48 and fixed components 41 of the first contacts 40, and the first arm components 56 of the second contacts 50 curve laterally, with the second arm components 47 of the first contacts 40 and the second arm components 57 of the second contacts 50 disposed parallel to each other and alternating in the lateral direction, so the contact components 48 of the first contacts 40 and the contact components 58 of the second contacts 50 can be disposed in rows in the longitudinal direction, while the pressing components 47a and 57a of the contacts 40 and 50 can be disposed in rows in the lateral direction (see FIG. 2).

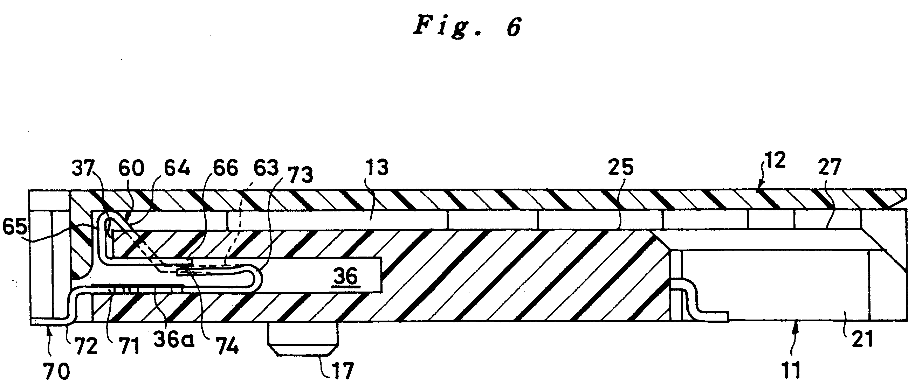

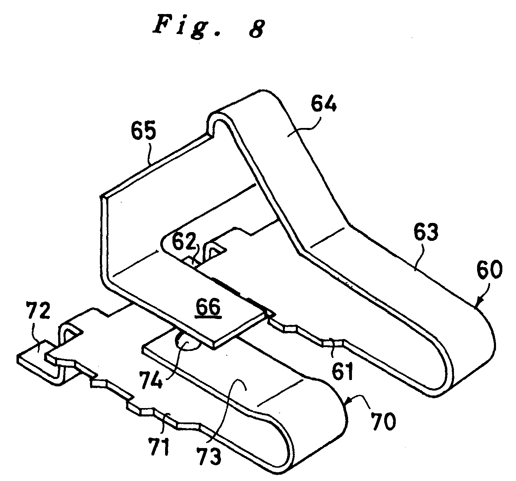

As shown in FIGS. 2 and 6, the first switch member 60 is provided such that it straddles the first space 35 and second space 36, and as a shown in FIG. 8 (the housing base 11 is omitted in FIG. 8), has a fixed component 61 fixed by press-fitting into a first switch member attachment groove 35a formed in the lower portion of the first space 35, a lead component 62 curving rearward and downward from the fixed component 61 and extending to the rear of the bottom wall 21, a first arm component 63 extending forward horizontally from the fixed component 61 and then turning back upward and extending rearward horizontally, a second arm component 64 formed extending diagonally rearward and upward from the upper end of the first arm component 63, a third arm component 65 formed extending downward from the upper end of the second arm component 64 and extending to the left (the second switch member 70 side), and a contact component 66 formed extending forward horizontally from the lower end of that portion of the third arm component 65 extending to the left. A cut-out 37 that opens upward is provided at the rear of the first space 35 and second space 36, the second arm component 64 is located within the card receptacle space 13 and protruding upward from this cut-out 37, and the contact component 66 is located within the second space 36.

As shown in FIGS. 2 and 6, the second switch member 70 is provided in the second space 36, and has a fixed component 71 fixed by press-fitting into a second switch member attachment groove 36a formed in the lower portion of the second space 36, a lead component 72 curving rearward and downward from the fixed component 71 and extending to the rear of the bottom wall 21, an arm component 73 extending forward horizontally from the fixed component 71 and then turning back upward and extending rearward horizontally, and a contact component 74 formed to protrude up from the top surface of this arm component 73. The contact component 74 of the second switch member 70 is located below the contact component 66 of the first switch member 60.

As shown in FIG. 1, the housing cover 12 is formed in a flat shape, having at its rear edge left and right protrusion attachment grooves 301b provided all the way from top to bottom, and having on its right and left sides a plurality of arm components 12b that extend downward and have hooks (curving inward; not shown) formed at their lower ends. When the housing cover 12 is placed over the housing base 11, the above-mentioned hooks of the arm components 12b hook into hook grooves 23a and 24a formed on the left and right side walls 23 and 24 of the housing base 11, and this attaches the housing cover 12 to the housing base 11. In this state in which the housing cover 12 is attached to the housing base 11, the protrusion attachment grooves 301a provided in the rear wall 22 of the housing base 11 and the protrusion attachment grooves 301b provided to the housing cover 12 line up perfectly over one another, forming left and right protrusion attachment grooves 301.

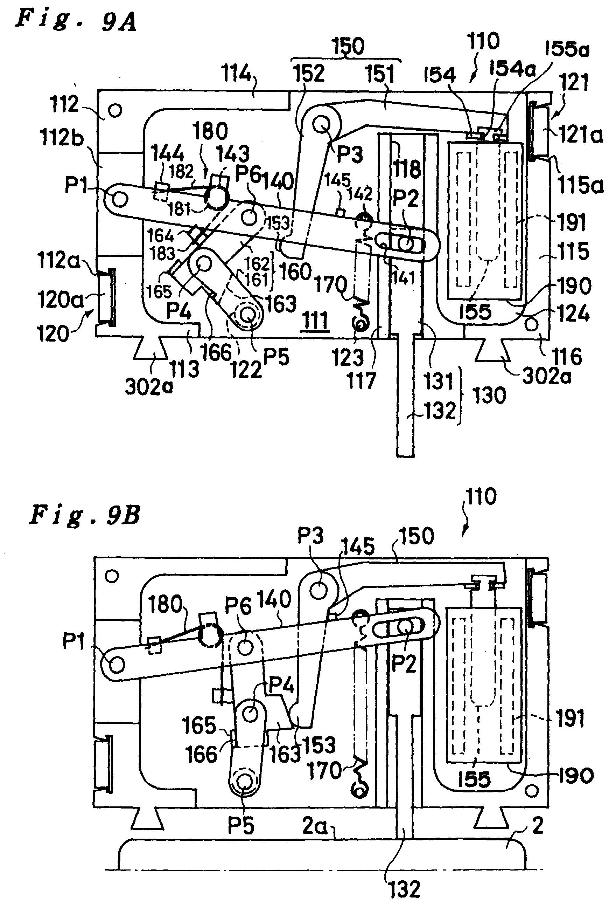

The structure of the ejector E will now be described through reference to FIGS. 1 and 9 (in FIG. 9, the top and bottom of the page correspond to the front and rear of the ejector E, and the left and right of the page correspond to the left and right of the ejector E. The connector main body M is omitted). An ejector housing 100 comprises a housing base 110 and a housing cover 200 (see FIG. 1).

As shown in FIG. 9A, the housing base 110 has a flat component 111 in the center, a left side wall 112 provided extending upward from the left of the flat component 111, and a right side wall 115 provided extending upward from the right of the flat component 111. Furthermore, a left front wall 113 and a rear wall 114 are formed extending to the right from the front and rear ends, respectively, of the left side wall 112, and a right front wall 116 is formed extending to the left from the front end of the right side wall 115. Also, a center wall 117 is provided extending rearward from the left end of the right front wall 116, and a slide groove 118 is formed extending longitudinally in the center of this center wall 117. Left and right coupling protrusions 302a formed extending forward and protruding in a triangular shape are provided to the left front wall 113 and the right front wall 116, respectively. Fixing piece attachment grooves 112a and 115a are provided extending vertically in front of the left side wall 112 and behind the right side wall 115, respectively, and fixing pieces 120 and 121 are attached to these grooves 112a and 115a, respectively.

A sliding member 130 formed extending longitudinally is attached to the above-mentioned slide groove 118. This sliding member 130 has a sliding component 131 that fits into the slide groove 118 and is slidable in the longitudinal direction, and a protruding component 132 formed extending forward from the front end of the sliding component 131. In a state in which the connector main body M and the ejector E are coupled (discussed below), this protruding component 132 protrudes into the card receptacle space 13 from an opening in the center of the rear wall 22 in the connector main body M, and is located at the same height as an IC card 2 when this IC card 2 has been inserted into the card receptacle space 13 of the connector main body M (accordingly, the card distal end 2a of the IC card 2 is able to strike the front end of the protruding component 132).

A step component 112b that is somewhat lower in height than the left side wall 112 is provided in the center of the left side wall 112 of the housing base 110, and the left end of a first arm member 140 extending to the left and right pivots around a first pin P1 on this step component 112b. A slot 141 extending in the axial direction is provided to the right end of the first arm member 140, and the first arm member 140 is also coupled with the sliding member 130 by a second pin P2 inserted into this slot 141. Accordingly, when the sliding member 130 slides back and forth in the slide groove 118, it causes the first arm member 140 to swing, and when the first arm member 140 swings back and forth pivoting on the first pin P1, it causes the sliding member 130 to slide back and forth.

A second arm member 150, on which a first arm component 151 extending more or less in the lateral direction and a second arm component 152 extending more or less in the longitudinal direction are formed in the shape of a crank, pivots around a third pin P3 at the rear center of the flat component 111. A joint member 154 having a rectangular notch 154a opening upward is attached in front of the right end of the first arm component 151, and a T-shaped constriction component 155a formed at the rear of a flat movable core 155 extending in the longitudinal direction (this movable core 155 is inserted into a coil 191 of an electromagnetic solenoid 190 (discussed below)) is fitted into the above-mentioned notch 154a with play therebetween. A protrusion 153 extending to the left is formed on the front end of the second arm component 152.

A pin attachment component 122 protruding upward is formed to the left front of the flat component 111, and a toggle device 160 that links this pin attachment component 122 to the first arm member 140 is provided between these members 122 and 140. This toggle device 160 has a first toggle member 161 located at the front and a second toggle member 162 located at the rear, and the rear end of the first toggle member 161 and the front end of the second toggle member 162 pivot around a fourth pin P4. The front end of the first toggle member 161 pivots around a fifth pin P5 on the pin attachment component 122, and the rear end of the second toggle member 162 pivots on a sixth pin P6 in the approximate center of the first arm member 140. A protruding component 163 extending to the right is formed at the front end of the second toggle member 162, and while the distal end of this protruding component 163 is not shown, it extends to a location lower than the height at which is located the protrusion 153 provided to the second arm component 152 of the second arm member 150 (accordingly, this protrusion 153 is able to strike the protruding component 163).

A first spring attachment protrusion 142 extending downward is provided to the portion of the first arm member 140 to the left of the slot 141, and a second spring attachment protrusion 123 is provided extending upward at a place on the flat component 111 located in front of this first spring attachment protrusion 142. A tension spring 170 is attached to these spring attachment protrusions 142 and 123 by hooking both ends of the spring thereon, and the action of this spring returns the first arm member 140 forward after it has swung to the rear. Accordingly, a forward biasing force is always provided to the sliding member 130.

A torsion spring attachment protrusion 143 extending downward is formed to the left of center on the first arm member 140, and the coil component 181 of a torsion spring 180 is attached by being fitted onto this torsion spring attachment protrusion 143. The two arm components 182 and 183 of this torsion spring 180 are stopped by a spring stopping protrusion 144 provided extending downward from the first arm member 140 and a spring stopping protrusion 164 provided extending downward from the second toggle member 162, respectively, and the front end side of the second toggle member 162 is biased to the right by the recoil force of this spring.

An electromagnetic solenoid 190 having a coil 191 extending longitudinally is disposed in a region 124 bounded by the right side wall 115, right front wall 116, and center wall 117 in the flat component 111. As mentioned above, the movable core 155 attached to the second arm member 150 is inserted into the above-mentioned coil 191. Although not shown, the electromagnetic solenoid 190 is connected to a current feeder switch provided on the outside of the housing base 110, and when this switch is depressed to supply current (when the power is turned on), a magnetic attraction force is generated, causing the movable core 155 to slide forward within the coil 191.

The housing cover 200 of the ejector E is formed in a flat shape as shown in FIG. 1, and the front edge thereof is provided with left and right triangular coupling protrusions 302b that protrude forward. The housing cover 200 is placed over and covers the housing base 110, and is fastened by two screws B1 and B2, at which point the coupling protrusions 302a provided to the housing base 110 and the coupling protrusions 302b provided to the housing cover 200 line up perfectly over one another, forming left and right coupling protrusions 302.

With the ejector E structured in this manner, the left and right coupling protrusions 302 are fitted from above into the left and right protrusion attachment grooves 301 on the connector main body M side. The connector 1 in which the connector main body M and the ejector E have thus been integrated is positioned by fitting the above-mentioned positioning protrusions 16 and 17 into holes made in a substrate (not shown), the lead components 42 and 52 of the contacts 40 and 50 and the lead components 62 and 72 of the switch members 60 and 70 are surface mounted in the terminal pattern of the substrate, and the fixing components at the lower parts of the fixing pieces 14 and 15 of the connector main body M (the fixing component 14a of the fixing piece 14 is shown in FIG. 1) and the fixing components 120a and 121a of the fixing pieces 120 and 121 of the ejector E (the fixing component 14a of the fixing piece 14 and the fixing component 120s of the fixing piece 120 are shown in FIG. 1) are surface mounted over the pattern of the substrate.

The IC card 2 is inserted into the card receptacle space 13 from the card receptacle slot 13a as indicated by arrow A (see FIG. 1) once the connector 1 has thus been attached onto the substrate. At this time, the left and right edges of the IC card 2 are guided by the guide grooves 28 and 29, allowing smooth insertion into the card receptacle space 13.

The card distal end 2a of the IC card 2 strikes the front end of the protruding component 132 of the ejector E midway through this insertion, and when the IC card 2 is pushed in further, the sliding member 130 slides rearward along the slide groove 118, and the right end of the first arm member 140 is moved to the rear. Since the first arm member 140 at this point swings to the rear by pivoting around the first pin P1, the toggle device 160 goes from a state of being curved to the left as shown in FIG. 9A to an extended state in which the axial lines of the toggle members 161 and 162 fall along a single straight line (the fourth to sixth pins 4, 5, and 6 are located on the same line). Thus, the toggle device 160 enters an extended state at the same time that the card distal end 2a strikes the front surface of the rear wall 22 of the housing base 11 in the connector main body M (the IC card 2 cannot be pushed in any further).

The toggle device 160 is in an extended state when the insertion of the IC card 2 is complete, but because the second toggle member 162 is subjected to a pressing force to the right from the torsion spring 180 as mentioned above, it curves to the right immediately after this extended state, and a stopper 165 formed on the second toggle member 162 is fitted into a cut-out 166 provided to the first toggle member 161. Accordingly, the right end of the first arm member 140, that is, the sliding member 130, remains locked in its position (completed insertion position) even though it is subjected to a forward biasing force by the tension spring 170. This results in the completion of the insertion of the IC card 2 (see FIG. 9B). The connector main body M is not shown in FIGS. 9A and 9B.

When the toggle device 160 is actuated as discussed above, the protruding component 163 formed extending to the right from the second toggle member 162 moves so that it sticks out to the right, and strikes the protrusion 153 formed on the second arm member 150 and pushes it to the right. This causes the second arm member 150 to swing by pivoting on the third pin P3, but in a state in which the sliding member 130 is locked in place as mentioned above, a stopper 145 provided to the first arm member 140 (see FIG. 9) strikes the second arm component 152 and limits the above-mentioned swing, so the coupling components (the notch 154a and constriction component 155a) of the joint member 154 and movable core 155 are positioned to the rear of the electromagnetic solenoid 190.

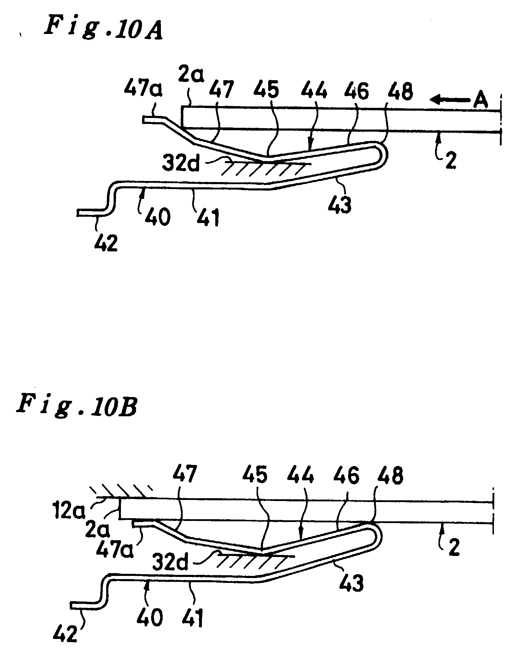

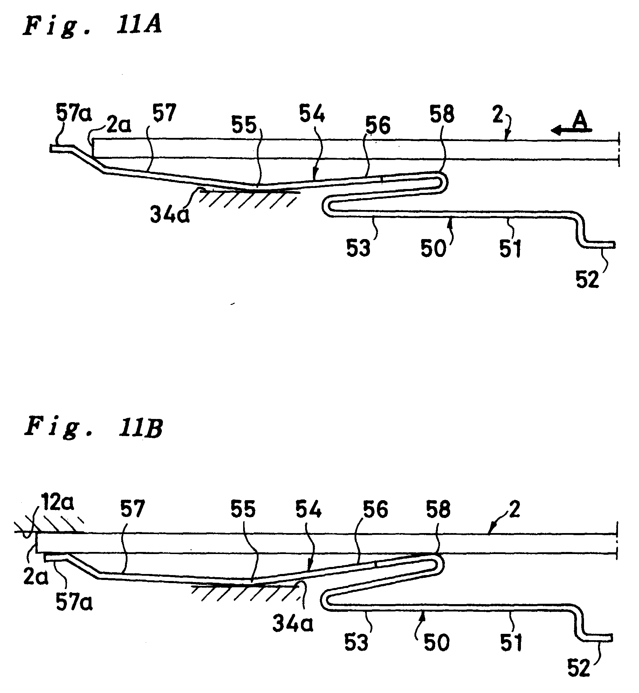

Also, when the IC card 2 is inserted into the card receptacle space 13, the card distal end 2a strikes the pressing components 47a and 57a of the first and second contacts 40 and 50 (see FIGS. 10A and 11A), and pushes (presses) these downward. This causes the V-shaped arm components 44 and 54 of the contacts 40 and 50 to swing around the bases 45 and 55, and pushes the contact components 48 and 58 upward, so the contact components 48 and 58 strike and touch the flat contact on the IC card (see FIGS. 10B and 11B).

When the IC card 2 has been inserted into the card receptacle space 13, the first and second contacts 40 and 50 are in a state of being forcibly elastically deformed by the IC card 2, so the pressing components 47a and 57a push the card distal end 2a of the IC card 2 upward, and press it against the lower surface 12a of the housing cover 12. Accordingly, the card distal end 2a is sandwiched between the pressing components 47a and 57a of the contacts 40 and 50 and the lower surface 12a of the main body housing cover 12 (see FIGS. 10B and 11B). This effectively holds the IC card 2 inside the card receptacle space 13.

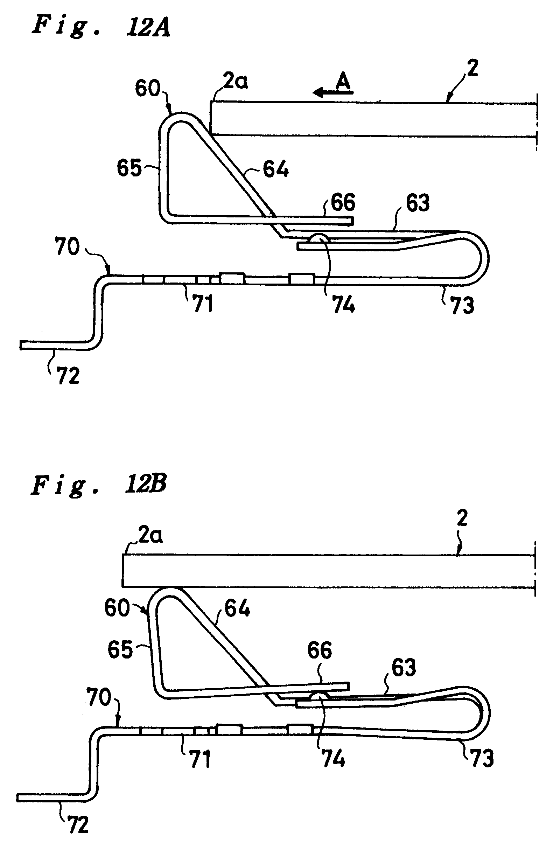

Also, when the IC card 2 is inserted into the card receptacle space 13, the card distal end 2a of the IC card 2 strikes the second arm component 64 of the first switch member 60 (see FIG. 12A) and pushes it down. As a result, the first switch member 60 is elastically deformed, and the contact component 66 moves downward until it strikes and touches the contact component 74 of the second switch member 70. Therefore, when the IC card 2 has been inserted all the way, the switch members 60 and 70 are electrically connected and the power is turned on. This allows data to be transferred between the IC card 2 and the connector 1.

The ejection of the IC card 2 will now be described. When the above-mentioned current supply switch is pressed and power is turned on to the electromagnetic solenoid 190, the electromagnetic solenoid 190 generates a magnetic attraction force and slides the movable core 155 forward in the coil 191. At this point the second arm member 150 quickly swings around the third pin P3, so the front end of the second arm component 152 swings to the left, and the protrusion 153 formed on the second arm component 152 pushes the protruding component 163 of the second toggle member 162 to the left. Therefore, after the toggle device 160 first enters an extended state, it then curves to the left. This unlocks the sliding member 130. As mentioned above, the movable core 155 and the constriction component 155a are fitted into the notch 154a of the joint member 154 with play therebetween, so even though the second arm member 150 swings around the third pin P3 and the joint member 154 scribes an arc, the movable core 155 is still able to slide in the longitudinal direction through the coil 191.

When the sliding member 130 has thus been unlocked, the first arm member 140 swings forward under the forward biasing force from the tension spring 170, and the sliding member 130 slides forward. This causes the protruding component 132 of the sliding member 130 to energetically push forward the IC card 2 that had been inserted all the way. As a result, the IC card 2 is ejected from the connector 1 (see FIG. 11A).

When the IC card 2 is thus ejected from the connector 1, the contacts 40 and 50 and the switch members 60 and 70 are released from their state of forced elastic deformation and return to the state they were in prior to the insertion of the IC card 2. Specifically, the contact components 48 and 58 are located below the card receptacle space 13, and the pressing components 47a and 57a are located inside the card receptacle space 13. The contact components 66 and 74 of the first and second switch members 60 and 70 separate, and the power is shut off.

Thus, in the card ejector mechanism pertaining to the present invention, first, since this is a mechanism for using electrical power to perform card ejection, the button or the like used for ejection can be provided at any place desired outside the housing, which affords greater design freedom and makes possible various designs (layouts). Plus, since this electrical power is just enough to actuate the second arm member 150 in order to release the locking of the toggle device 160, etc., that is, it need only be enough to generate a magnetic force that will attract the movable core 155, and the ejection of the IC card 2 itself is accomplished by the biasing force of the tension spring 170, which requires no electrical power, less electrical power is consumed and the structure is simpler than with a mechanism that uses an electric motor to send out and eject a card, and this results in a lower cost. Furthermore, since an electric motor is not necessarily needed, the connector can be made more compact in size.

Also, the structure may be such that power is sent to the electromagnetic solenoid 190 when the current supply switch is pressed, as above, but if it is desired to have a structure in which the IC card 2 is ejected after the exchange of data between the IC card 2 and the connector 1 has been concluded, then a controller or the like having a function of adjusting the timing at which power is sent to the electromagnetic solenoid 190 should be interposed between the connector 1 and the switch controlling the ejection.

The first embodiment of the card ejector mechanism pertaining to the present invention was described above, but the present invention is not limited to the structure given in the above embodiment, and various design modifications are possible. For instance, rubber, an elastomer, or another such elastic body may be used in place of the tension spring 170. Also, neither the means for locking the sliding member 130 when the IC card 2 has been fully inserted, nor the means for unlocking it, is limited to the above structure. For instance, the structure may be such that when the sliding member 130 is in the above-mentioned fully inserted state, it is locked by fitting a pin biased by a spring or the like into a hole provided in the sliding member 130, and this locking is released by removing this pin.

Also, the connector main body M does not necessarily have to have the same structure as above, as long as the protruding component 132 of the sliding member 130 is able to slide in the longitudinal direction within the card receptacle space, and the height of the above-mentioned protruding component 132 is the same as the height of the IC card 2 inserted into the card receptacle space. Furthermore, an individually configured connector main body M and ejector E were coupled with the connector 1 in the above embodiment, but instead of this structure, components corresponding to the above-mentioned connector main body M and ejector E may, of course, be integrally configured (within a single housing).

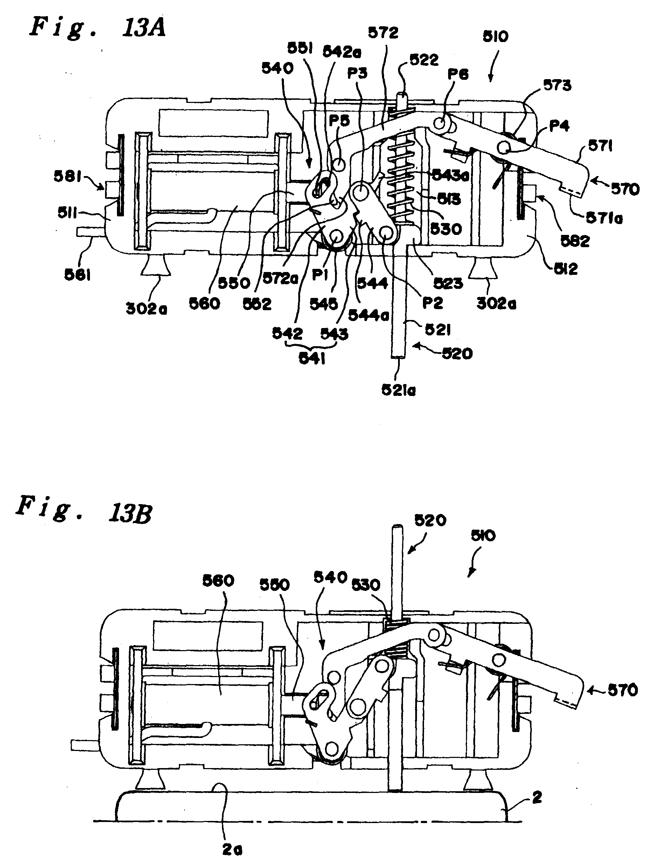

A connector equipped with the card ejector mechanism pertaining to the second embodiment of the present invention will now be described. In this connector, the connector main body M is structured the same as the connector main body M pertaining to the first embodiment given above. Therefore, the connector main body M will be described using the same numbers as needed, but the description of the structures of the connector main body M and the card 2 will be omitted, and the structure of the ejector E will be described through reference to FIGS. 13A and 13B. The ejector housing of this ejector E comprises an ejector housing base 510 and an ejector housing cover (not shown), and can be detachably attached to the rear of the connector main body M.

As shown in FIG. 13A, the ejector housing base 510 is formed in a rectangular shape that is longer in the lateral direction, and on the inside thereof are assembled a sliding member 520 that slides to the rear when pushed by the end of the card 2 during the insertion of the card 2, a spring 530 that biases the sliding member 520 forward, a toggle device 540 that locks the sliding member 520 against the biasing force of the spring 530 when the card 2 has been inserted, an unlocking shaft 550, an electromagnetic solenoid 560 that attracts the unlocking shaft 550 to the left by electromagnetic force upon receiving a supply of electrical power, and an unlocking lever 570 that is manually operated and pushes the above-mentioned unlocking shaft 550 to the left. Fixing pieces 581 and 582 are attached to the left and right side walls 511 and 512, respectively, of the ejector housing base 510.

The sliding member 520 is a rod-shaped member having a card push-out component 521 extending forward and a spring attachment component 522 extending downward from a cylinder 523 in the center, and is attached in a slide groove 513 of the ejector housing base 510 when the spring attachment component 522 has been passed through the spring 530 and the spring attached thereto. Here, the spring 530 is attached in a compressed state in the slide groove 513, and therefore the spring 530 is always biasing the cylinder 523 of the sliding member 520 (that is, the entire sliding member 520) forward. Also, the card push-out component 521 of the sliding member 520 protrudes into the card receptacle space 13 from an opening in the center of the rear wall 22 of the connector main body M in a state in which the connector main body M and the ejector E are coupled, and is positioned at the same height as the card 2 inserted in the card receptacle space 13 of the connector main body M (the distal end 2a of the card 2 is therefore able to strike the front end 521a of the card push-out component 521).

The toggle device 540 comprises a first toggle member 541 formed in a V-shape and having a left arm component 542 and a right arm component 543, and a second toggle member 544 formed in a straight shape. Here, the first toggle member 541 is able to swing because the base of the two arm components 542 and 543 (their shared front end) is attached at the front center of the ejector housing base 510 by the first pin P1, and the second toggle member 544 is able to swing because its right end is attached to the cylinder 523 of the above-mentioned sliding member 520 by the second pin P2. The rear end of the right arm component 543 and the left end of the second toggle member 544 pivot on the third pin P3 such that they can rotate relative to one another. A protrusion component 543a extending in the same direction as the right arm component 543 is formed on the rear end of this right arm component 543, and a stop component 544a capable of stopping the above-mentioned protrusion component 543a is provided to the second toggle member 544. A first coil spring 545 is attached below the first pin P1, and the first toggle member 541 is always in a state of being biased to the right swing side by this first coil spring 545.

The unlocking shaft 550 is a rod-shaped member made of iron and formed extending to the left and right, and is attached such that it passes through the electromagnetic solenoid 560, which extends to the left and right and is attached to the left of the ejector housing base 510. A prong 551 extending upward is formed on the right end of the unlocking shaft 550, and is attached in a slot 542a formed in the rear end of the above-mentioned left arm component 542. The electromagnetic solenoid 560 generates an electromagnetic force when power is sent in through a lead 561, and attracts the unlocking shaft 550 and slides it to the left.

The unlocking lever 570 comprises a straight first lever 571 swingably attached to the right of the ejector housing base 510 by the fourth pin P4, and a crank-shaped second lever 572 swingably attached in the center of the ejector housing base 510 by the fifth pin P5, and the left end of the first lever 571 and the right end of the second lever 572 pivot on the sixth pin P6 (the left end of the first lever 571 has a slot). A second coil spring 573 is attached below the fourth pin P4, and the left end of the first lever 571 is always in a state of being biased rearward by this second coil spring 573. A pressing component 571a formed extending downward is provided to the right end of the first lever 571, and the front end 572a of the second lever 572 (the portion in front of the fifth pin P5) is able to strike the right end 552 of the unlocking shaft 550, although this is not shown in detail.

The housing cover 200 is formed in a flat shape as shown in FIG. 1, and the front edge thereof is provided with left and right triangular coupling protrusions 302b that protrude forward. The ejector housing cover 200 is placed over and covers the ejector housing base 510, and is attached by fasteners (not shown), at which point the left and right coupling protrusions 302b perfectly line up vertically with the left and right coupling protrusions 302a provided to the ejector housing base 510 (see FIG. 9), forming the coupling protrusions 302.

With the ejector E structured in this manner, the left and right coupling protrusions 302 are fitted from above into the left and right protrusion attachment grooves 301 on the connector main body M side. The connector 1 in which the connector main body M and the ejector E have thus been integrated is positioned by fitting the above-mentioned positioning protrusions 16 and 17 into holes made in a substrate (not shown), the lead components 42 and 52 of the contacts 40 and 50 and the lead components 62 and 72 of the switch members 60 and 70 are surface mounted in the terminal pattern of the substrate, and the lower parts of the fixing pieces 14 and 15 of the connector main body M and the lower parts of the fixing pieces 581 and 582 of the ejector E are surface mounted over the pattern of the substrate.

With the connector 1 attached on a substrate in this manner, the card 2 is inserted into the card receptacle space 13 through the opening 13a as indicated by the arrow A (see FIG. 1). At this time, the left and right edges of the card 2 are guided by the guide grooves 28 and 29, allowing smooth insertion into the card receptacle space 13.

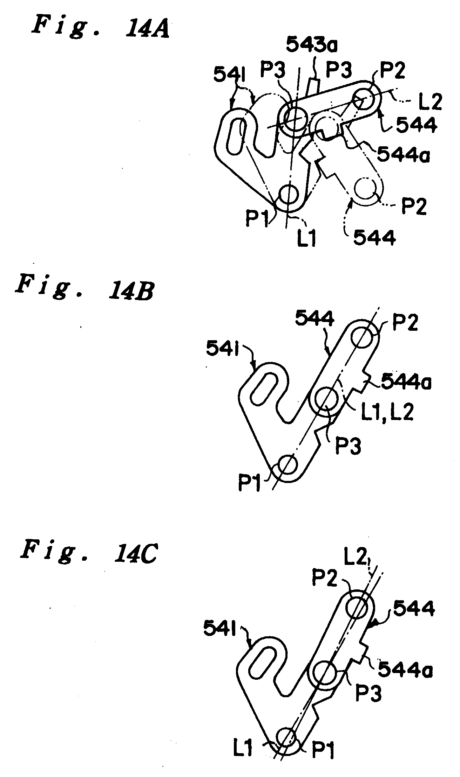

The distal end 2a of the card 2 strikes the front end 521a of the card push-out component 521 of the sliding member 520 midway through this insertion, and when the card 2 is pushed in further, the sliding member 520 slides rearward along the slide groove 513. This causes the right end of the second toggle member 544 (the second pin P2) to move rearward, and the left end of the second toggle member 544 presses the rear end of the right arm component 543 to the left via the third pin P3. This causes the entire first toggle member 541 to swing to the left side around the first pin P1, and the right end of the second toggle member 544 (the second pin P2) can be positioned further to the rear than the left end of the second toggle member 544 (the third pin P3). FIG. 14A shows the state at this point (the two-dot chain line indicates the positions of the two toggle members 541 and 544 corresponding to FIG. 13A).

As the card 2 is pushed in further to the rear and the sliding member 520 is pressed rearward, the members 543 and 544 move so that the angle formed by the axis L1 of the right arm component 543 (the axis that connects the first pin P1 and the third pin P3) and the axis L2 of the second toggle member 544 (the axis that connects the second pin P2 and the third pin P3) approaches 180 degrees, with this angle reaching 180 degrees when the distal end 2a of the card 2 strikes the front surface of the rear wall 22 of the housing base 11. Specifically, this is a state in which L1 and L2 are located on the same line, and the members 542 and 544 are located at the change point (see FIG. 14B).

Here, because the first toggle member 541 is subjected to a biasing force to the right swing side by the first coil spring 545 as mentioned above, the second toggle member 544 is pressed by the first toggle member 541 and its left end (the third pin P3) is swung to the right, but after just a small swing, the protrusion component 543a of the right arm component 543 is stopped by the stop component 544a of the second toggle member 544, so any further swing is prohibited (see FIG. 14C). In this state, the sliding member 520 is in a locked state in which it cannot slide forward even though it is subjected to the forward biasing force by the spring 530, and this is the fully inserted state of the card 2. FIG. 13B shows this fully inserted card state (the connector main body M is not shown in FIGS. 13A and 13B). Even if the first toggle member 541 swings around the first pin P1 as above, the prong 551 of the unlocking shaft 550 will not come out of the slot 542a of the first toggle member 541, and the engaged state of the members 550 and 541 is preserved.

When the card 2 is inserted into the card receptacle space 13, the distal end 2a of the card 2 strikes the pressing components 47a and 57a of the first and second contacts 40 and 50 (see FIGS. 11A and 12A), pushing (pressing) these downward. The V-shaped arm components 44 and 54 of the contacts 40 and 50 swing around the bases 45 and 55 and push up the contact components 48 and 58, so the contact components 48 and 58 strike and touch the flat contact of the card 2 (see FGIS. 11B and 12B). After the flat contact has struck the contact components 48 and 58, it continues to move a little to the rear as the card 2 is pushed in, so there is a wiping effect between the contacts, preventing poor contact.

In a state in which the card 2 is inserted into the card receptacle space 13, the first and second contacts 40 and 50 are forcibly elastically deformed by the card 2, so the pressing components 47a and 57a push the distal end 2a of the card 2 upward and press it against the lower surface 12a of the housing cover 12. Accordingly, the distal end 2a of the card 2 is sandwiched between the pressing components 47a and 57a of the contacts 40 and 50 and the lower surface 12a of the housing cover 12 (see FIGS. 11B and 12B). This effectively holds the card 2 inside the card receptacle space 13.

Also, when the card 2 is inserted into the card receptacle space 13, the distal end 2a of the card 2 strikes the second arm component 64 of the first switch member 60 (see FGI 13A) and pushes it downward. This elastically deforms the first switch member 60 and moves the contact component 66 downward until it strikes and touches the contact component 74 of the second switch member 70. Therefore, when the card 2 has been inserted all the way, the switch members 60 and 70 are electrically connected and the power is turned on.

The ejection of the card 2 will now be described. A card ejection switch (not shown) is provided on the outside of the connector 1, and when this is operated, power is sent through the lead 561 and the electromagnetic solenoid 560 generates an electromagnetic force. This causes the unlocking shaft 550 to be attracted to the left, and the slot 542a in the first toggle member 541 engaged with the prong 551 provided on the right end of the unlocking shaft 550 is pulled to the left. As a result, the first toggle member 541 swings to the left around the first pin P1, but since the third pin P3 is being pulled to the left at this point, the second toggle member 544 also swings to the left around the second pin P2, and the right arm component 543 and the second toggle member 544 cross the above-mentioned change point and curve to the left. This releases the locked state provided by the toggle device 540, and the sliding member 520 slides forward under the forward biasing force of the spring 530. As a result, the card push-out component 521 energetically pushes the fully inserted card 2 out to the front, and ejects it from the connector 1 (see FIG. 13A).

When the card 2 is thus ejected from the connector 1, the contacts 40 and 50 and the switch members 60 and 70 are released from their state of forced elastic deformation and return to the state they were in prior to the insertion of the card 2. Specifically, the contact components 48 and 58 are located below the card receptacle space 13, and the pressing components 47a and 57a are located inside the card receptacle space 13. The contact components 66 and 74 of the first and second switch members 60 and 70 separate, and the power is shut off.

It is also possible to eject the card 2 manually with this connector 1. In this manual ejection, the pressing component 571a formed on the first lever 571 of the unlocking lever 570 is pressed rearward with a finger or via a separately provided linking mechanism. This causes the first lever 571 to swing around the fourth pin P4 in the direction in which the left end is moved forward, and also causes the second lever 572 to swing around the fifth pin P5 in the direction in which the front end 572a is moved to the left. As a result, the front end 572a of the second lever 572 strikes the right end 552 of the unlocking shaft 550 and presses it to the left, and the prong 551 provided to the unlocking shaft 550 pulls the slot 542a in the first toggle member 541 to the left. This releases the locked state of the sliding member 520, the sliding member 520 slides forward under the biasing force of the spring 530, and the card 2 is ejected from the connector 1.

Thus, in the card ejector mechanism pertaining to the present invention, first, since this is a mechanism for using electrical power to eject the card 2, remote operation is possible, operation is easier, and this electrical power need only be a tiny, momentary pulse of power, just enough to generate the magnetic force needed to actuate the unlocking shaft 550 in order to release the locking hold produced by the toggle device 540, etc., and since the ejection of the card 2 itself is accomplished by the biasing force of the spring 530, which requires no electrical power, less electrical power is consumed and the structure is simpler than with a mechanism that uses an electric motor to send out and eject a card, and this results in a lower cost. Furthermore, since an electric motor is not necessarily needed, the connector can be made more compact in size. Also, the structure may be such that power is sent to the electromagnetic solenoid 560 when the card ejection switch is pressed, as in this embodiment, but if it is desired to have a structure in which the card 2 is ejected after the exchange of data between the card 2 and the connector 1 has been concluded, then a controller or the like having a function of adjusting the timing at which power is sent to the electromagnetic solenoid 560 should be interposed between the connector 1 and the switch controlling the ejection.

The above-mentioned lock hold can also be released by manually operating the unlocking lever 570, so it will still be possible to reliably eject the card 2 even if an electrical malfunction (such as insufficient current) should occur in the above-mentioned card ejection switch, the lead 561, the electromagnetic solenoid 560, or the like which would prevent the sliding member 520 from being unlocked.

The above connector 1 is structured such that the unlocking lever 570 only strikes the unlocking shaft 550 and presses on it when manually operated, and the unlocking shaft 550 and the unlocking lever 570 are provided in a non-engaged state, so when the unlocking shaft 550 is attracted by the electromagnetic solenoid 560, the unlocking lever 570 will not move along with it, which prevents noise from being generated by the operation of the manual unlocking means every time a card is ejected by the electric unlocking means.

The second embodiment of the card ejector mechanism pertaining to the present invention was described above, but the present invention is not limited to the structure given in the above second embodiment, and various design modifications are possible. For instance, rubber, an elastomer, or another such elastic body may be used in place of the spring 530. Also, the connector main body M does not necessarily have to have the same structure as above, as long as the card push-out component 521 of the sliding member 520 is able to slide in the longitudinal direction within the card receptacle space, and the height of the above-mentioned card push-out component 521 is the same as the height of the card 2 inserted into the card receptacle space. Furthermore, an individually configured connector main body M and ejector E were coupled with the connector 1 in the above embodiment, but instead of this structure, components corresponding to the above-mentioned connector main body M and ejector E may, of course, be integrally configured (within a single housing).

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

### RELATED APPLICATIONS

This application claims the priority of Japanese Patent Applications No.11-059684 filed on March 8, 1999, and No.11-227631 filed on August 11, 1999, which are incorporated herein by reference.

## Claims

1. A card ejector mechanism, comprising:
a housing having a card receptacle space for receiving a card inserted through an opening formed at the front end;
a sliding member that is provided slidably in the longitudinal direction within said housing and that is pushed and slid to the rear by the end of said card when said card is inserted into said card receptacle space;
an elastic member that biases said sliding member forward;
locking means for keeping said sliding member locked against the biasing force of said elastic member when the insertion of said card into said card receptacle space has been completed; and
unlocking means for releasing the lock hold of said card by said locking means when a supply of electrical power has been received.

2. The card ejector mechanism according to Claim 1, wherein said housing comprises a main body housing capable of receiving said card, and an ejector housing that holds said sliding member movably in the longitudinal direction; and
said elastic member, said locking means, and said unlocking means are provided inside said ejector housing.

3. The card ejector mechanism according to Claim 2, wherein said ejector housing is removably attached to said main body housing.

4. The card ejector mechanism according to any of Claims 1 to 3, wherein said card comprises an IC card having a built-in IC chip and flat contacts connected to said IC chip, and contacts acre provided inside the housing so that they come into direct contact with said flat contacts and perform data transfer.

5. The card ejector mechanism according to any of Claims 1 to 4, wherein said unlocking means comprises an electromagnet that generates an electromagnetic force upon the receipt of a supply of electrical power, and said locking means is unlocked by said electromagnetic force.

6. The card ejector mechanism according to any of Claims 1 to 5, wherein said locking means has a toggle device that is linked to said sliding member and operates according to the longitudinal sliding of said sliding member,
when said card is inserted into said card receptacle space and said sliding member is slid to the rear, said toggle device is moved to the locking position and said sliding member is kept locked in a state in which it has slid to the rear, and
the restriction of said sliding member is released when said unlocking means moves said toggle device to the unlocking position.

7. The card ejector mechanism according to any of Claims 1 to 6, having manual unlocking means for releasing the lock hold of said sliding member by said locking means through manual operation.

8. The card ejector mechanism according to Claim 7, said locking means having a toggle device, and said electric unlocking means having a shaft member coupled to said toggle device, and an electromagnetic solenoid that attracts said sliding member and operates said toggle device to the unlocking side when electrical power has been supplied, and
said manual unlocking means pressing on said shaft member when manually operated, so that said toggle device is moved to the unlocking side.
